# EUROPÄISCHE PATENTSCHRIFT

(11) **EP 4 430 313 B1**
(45) Veröffentlichungstag und Bekanntmachung des Hinweises auf die Patenterteilung: **13.05.2026**
(21) Anmeldenummer: 22844219.0
(22) Anmeldetag: 28.12.2022
(51) Int. Cl.: F16B 5/02, B61D 17/00, F16B 43/00

(54) **VORRICHTUNG ZUR SCHWINGUNGSGEDÄMPFTEN BEFESTIGUNG EINES WERKSTÜCKS**
DEVICE FOR VIBRATION-DAMPED FASTENING OF A WORKPIECE
DISPOSITIF DE FIXATION AMORTIE PAR VIBRATIONS D'UNE PIÈCE À USINER

(30) Priorität: 01.02.2022 DE 102022201044
(43) Veröffentlichungstag der Anmeldung: 18.09.2024
(73) Patentinhaber: Siemens Mobility GmbH, 80997 München (DE)
(72) Erfinder: LANDKAMMER, Stefan, 91161 Hilpoltstein (DE); SEEFRIED, Christoph, 90513 Zirndorf (DE); EHMANN, Sergius, 91522 Ansbach (DE)
(74) Vertreter: Siemens Patent Attorneys
(86) Internationale Anmeldenummer: PCT/EP2022/087951
(87) Internationale Veröffentlichungsnummer: WO 2023/147936

(56) Entgegenhaltungen:
- DE-A1- 102011 079 617
- DE-A1- 102012 216 297
- DE-C- 841 532

## Beschreibung

Die Erfindung betrifft eine Vorrichtung zur lösbaren Befestigung eines Werkstücks umfassend eine Schraube oder eine Gewindestange sowie das zu befestigende Werkstück mit einer Durchgangsbohrung zur Durchführung der Schraube oder der Gewindestange.

Werkstücke in ungedämpften Bereichen von Fahrzeugen, beispielsweise Verkleidungsteile an Fahrwerken von Schienenfahrzeugen, sind ungedämpften Stößen, Vibrationen oder Schwingungen mit hoher Zyklenzahl ausgesetzt. Daher wurden insbesondere Werkstücke aus Kunststoffen mit niedrigen Dauerfestigkeiten, wie sie insbesondere bei generativ gefertigten Werkstücken verwendet werden, in diesen Bereichen nicht eingesetzt. Konventionelle Schraubverbindungen zur Befestigung solcher Werkstücke, die von Grund auf schon lokale Spannungsspitzen in das Kunststoffbauteil einbringen, sind zusätzlich dafür verantwortlich, dass den Belastungen nicht standgehalten werden kann, da auch durch niedrige zyklische Belastungen Materialschädigungen und Rissbildung bis hin zum Bruch zu erwarten sind.

Druckschrift DE 10 2011 079 617 A1 offenbart eine gattungsgemäße Vorrichtung zur lösbaren Befestigung eines Werkstücks gemäß den Merkmalen des Oberbegriffs des unabhängigen Patentanspruchs 1.

Der Erfindung liegt die Aufgabe zugrunde, die Verfügbarkeit von Werkstücken in ungedämpften Bereichen von Fahrzeugen zu erhöhen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Vorrichtung zur lösbaren Befestigung eines Werkstücks umfasst eine Schraube oder eine Gewindestange, das zu befestigende Werkstück und fürderhin wenigstens zwei elastisch verformbare Lochscheiben, die jeweils eine Durchgangsbohrung zur Durchführung der Schraube oder der Gewindestange aufweisen. Das zu befestigende Werkstück wird nachfolgend nur noch als das Werkstück bezeichnet. Es weist eine Durchgangsbohrung zur Durchführung der Schraube oder der Gewindestange sowie eine erste Anlagefläche zur Anlage einer ersten Lochscheibe und eine zweite Anlagefläche zur Anlage einer zweiten Lochscheibe beidseitig der Durchgangsbohrung auf. Das Werkstück ist geeignet ausgebildet, die erste Lochscheibe an der ersten Anlagefläche anliegend und die zweite Lochscheibe an der zweiten Anlagefläche anliegend im Bereich ihrer Durchgangsbohrung derart in jeweils vorgegebenen, bestimmungsgemäßen Montagelagen aufzunehmen, dass die Durchgangsbohrungen des Werkstücks und der ersten Lochscheibe und der zweiten Lochscheibe zumindest teilweise überdeckend angeordnet sind, so dass die Schraube oder die Gewindestange durch die Durchgangsbohrung des Werkstücks und durch die Durchgangsbohrung der ersten Lochscheibe und durch die Durchgangsbohrung der zweiten Lochscheibe durchführbar ist. Darüber hinaus ist das Werkstück derart ausgebildet, dass es einen vorgegebenen freien Raum um die erste Lochscheibe in radialer Richtung zur Achse der Durchgangsbohrung durch die erste Lochscheibe in der vorgegebenen, bestimmungsgemäßen Montagelage der ersten Lochscheibe um die erste Lochscheibe und in einem entspannten Zustand der ersten Lochscheibe aufweist, so dass sich die erste Lochscheibe in zumindest vorgegebenem Maße elastisch in radialer Richtung verformen kann. Gleichermaßen weist das Werkstück einen vorgegebenen freien Raum um die zweite Lochscheibe in radialer Richtung zur Achse der Durchgangsbohrung durch die zweite Lochscheibe in der vorgegebenen, bestimmungsgemäßen Montagelage und in einem entspannten Zustand der zweiten Lochscheibe auf, so dass sich die zweite Lochscheibe in zumindest vorgegebenem Maße elastisch in radialer Richtung verformen kann.

Bei dem Werkstück kann es sich um ein Verkleidungsteil für ein Fahrzeug, insbesondere für ein Schienenfahrzeug, insbesondere für ein Fahrwerk oder ein Drehgestell des Schienenfahrzeugs handeln.

Ein erfindungsgemäßes Fahrzeug, insbesondere ein Schienenfahrzeug, umfasst entsprechend wenigstens eine erfindungsgemäße Vorrichtung zur lösbaren Befestigung eines Werkstücks. Das Werkstück kann dabei in einem ungefedertem, ungedämpftem Bereich des Fahrzeugs oder an einer Stelle des Fahrzeugs montiert sein, wo es hohen, zyklischen Betriebslasten, insbesondere Vibrationen bzw. Schwingungen, insbesondere mit hoher Zyklenzahl, und/oder Stößen ausgesetzt ist. Beispielsweise ist es an einem Fahrwerk oder Drehgestell des Fahrzeugs angeordnet und lösbar befestigt. Beispielsweise handelt es sich bei dem Werkstück um eine Blende oder um ein Verkleidungsteil, insbesondere für ungedämpfte Bereiche des Fahrzeugs, wie z.B. um eine Abdeckung für ein Fahrwerk oder Drehgestell des Fahrzeugs.

Das Werkstück wird mittels der Schraube oder der Gewindestange, welche auch als Gewindebolzen bezeichnet werden kann, an einem Bauteil, insbesondere des Fahrzeugs, beispielsweise einem Rahmen eines Fahrwerks des Fahrzeugs, lösbar befestigt. Es wird mit dem Bauteil verschraubt. Zur Herstellung dieser Schraubverbindung kann das Bauteil selbst eine Bohrung mit komplementärem Innengewinde zum Außengewinde der Schraube oder der Gewindestange aufweisen oder es weist eine Durchgangsbohrung auf und die Verschraubung erfolgt mittels zusätzlichem Gewindeträger, beispielsweise einer Mutter. Die Schraube kann somit sowohl als Durchsteckschraube mit passendem Gewindeträger oder Einzieh- oder Stiftschraube ausgebildet sein, wobei dann das Bauteil ein zum Außengewinde der Schraube komplementäres Innengewinde aufweist und somit selbst Gewindeträger ist. Analog wird bei einer Gewindestange ein weiterer Gewindeträger anstelle des Schraubenkopfs verwendet. Durch die Verschraubung wird eine axial zur Durchgangsbohrung des Werkstücks wirkende Vorspannung auf das Werkstück unter Zwischenlage der Lochscheiben zwischen dem Schraubenkopf oder dem Gewindeträger und dem weiteren Gewindeträger aufgebracht.

Durch diese axiale Vorspannung werden die Lochscheiben elastisch verformt. Hierzu umfassen sie jeweils ein elastisches Material, insbesondere ein Elastomer, beispielsweise Gummi. Dadurch wird eine flächige Anlage der Lochscheiben an den jeweiligen Anlageflächen und eine gleichmäßige Krafteinleitung in das Werkstück gewährleistet. Gleichzeitig dient das elastische Material zur Schwingungsdämpfung und/oder Federung.

Das Werkstück seinerseits ist aus einem anderen Werkstoff hergestellt. Es umfasst insbesondere einen Kunststoff, beispielsweise ein Polymer, welches auch niedrige Dauerfestigkeiten aufweisen kann. Die erfindungsgemäße Befestigung ermöglicht den Einsatz solcher Werkstoffe.

Gemäß einer Weiterbildung ist das Werkstück mittels eines generativen, insbesondere additiven, schichtweisen Fertigungsverfahrens aus einem Kunststoff hergestellt. Zur additiven Fertigung bieten sich amorphe Werkstoffe mit guter thermoplastischer Verarbeitbarkeit an. Dabei kann das Werkstück zumindest teilweise mit Schichten mit radialem Richtungsanteil oder gar in axialer Richtung zur Durchgangsbohrung schichtweise hergestellt sein, so dass eine Krafteinleitung durch die gegenseitig gegen das Werkstück mittels der Schraube oder der Gewindestange vorgespannten Lochscheiben auf verschiedene Schichten verteilt ist.

Bei der Montage der Vorrichtung wird das Werkstück zu einem Bauteil ausgerichtet, an welchem es befestigt werden soll, insbesondere an einer Stelle mit hohen, zyklischen Betriebslasten, beispielsweise an einem Rahmen eines Fahrwerks eines Fahrzeugs. Die erste und zweite Lochscheibe weisen jeweils eine Auflagefläche zur Anlage an den jeweiligen Anlageflächen des Werkstücks auf. Sie sind entsprechend ihrerseits zum Werkstück derart ausgerichtet und am Werkstück angelegt, dass die erste Lochscheibe mit der ersten Auflagefläche an der ersten Anlagefläche des Werkstücks und die zweite Lochscheibe mit der zweiten Auflagefläche an der zweiten Anlagefläche des Werkstücks anliegen. In den jeweils vorgegebenen, bestimmungsgemäßen Montagelagen sind die Durchgangsbohrungen des Werkstücks und der ersten und der zweiten Lochscheibe zumindest teilweise überdeckend angeordnet und die Schraube oder die Gewindestange ist durch die Durchgangsbohrung des Werkstücks und durch die Durchgangsbohrungen der ersten und der zweiten Lochscheibe durchgeführt. Dabei ist in einem entspannten Zustand der ersten Lochscheibe ein vorgegebener freier Raum in radialer Richtung zur Achse der Durchgangsbohrung durch die erste Lochscheibe um die erste Lochscheibe vorgesehen, so dass sich die erste Lochscheibe in zumindest vorgegebenem Maße elastisch in radialer Richtung verformen kann. Analog ist in einem entspannten Zustand der zweiten Lochscheibe ein vorgegebener freier Raum in radialer Richtung zur Achse der Durchgangsbohrung durch die zweite Lochscheibe um die zweite Lochscheibe vorgesehen, so dass sich die zweite Lochscheibe in zumindest vorgegebenem Maße elastisch in radialer Richtung verformen kann.

Das zu befestigende Werkstück weist beispielsweise eine Wandung auf, durch welche die Durchgangsbohrung führt. Die Wandungsdicke ist geeignet gewählt. Auf einer ersten Seite der Wandung ist die erste Anlagefläche ausgebildet und auf einer der ersten Seite gegenüberliegenden und von der ersten Seite abgewandten zweiten Seite der Wandung ist die zweite Anlagefläche ausgebildet. Die erste und die zweite Anlageflächen sind also auf unterschiedlichen Seiten der Wandung angeordnet und entgegengesetzt gerichtet, so dass die erste Lochscheibe auf der ersten Seite der Wandung und die zweite Lochscheibe auf der zweiten Seite der Wandung anliegen.

Die Anlageflächen sind insbesondere komplementär zu den Auflageflächen ausgebildet, beispielsweise jeweils eben. Die erste Lochscheibe kommt flächig, insbesondere vollflächig, an der ersten Seite des Werkstücks zur Anlage. Gleichermaßen kommt die zweite Lochscheibe flächig, insbesondere vollflächig, an der zweiten Seite des Werkstücks zur Anlage. Die An- und Auflageflächen können ferner auch angeschrägt, beispielsweise kegel- oder kegelstumpfförmig, oder gar gekrümmt sein, beispielsweise kugelsegmentförmig. Die erste Lochscheibe ist mittels einer Schraubverbindung unter Mitwirkung der Schraube oder der Gewindestange entgegen der ersten Seite des Werkstücks vorspannbar. Gleichzeitig wird die zweite Lochscheibe bei der Montage mittels der Schraubverbindung mittels der Schraube oder der Gewindestange entgegen der zweiten Seite des Werkstücks vorgespannt.

Die Achsen der Durchgangsbohrungen durch das Werkstück sowie durch die erste und zweite Lochscheiben können dabei zusammenfallen. Der Durchmesser der Durchgangsbohrung durch das Werkstück kann größer sein als die Durchmesser der Durchgangsbohrungen durch die Lochscheiben. Die Durchgangsbohrungen der Lochscheiben überdecken bei zusammenfallenden Achsen dann die Durchgangsbohrung durch das Werkstück. Bei gleichen Durchmessern können die erste und die zweite Lochscheibe derart ausgerichtet sein, dass ihre Durchgangsbohrungen fluchtend sind. Die Durchgangsbohrung durch das Werkstück zur Durchführung der Schraube oder der Gewindestange weist insbesondere einen Durchmesser auf, welcher relativ zur Schraube oder Gewindestange so bemessen ist, dass das Werkstück frei von einer Berührung der Schraube oder der Gewindestange ist, und dies sowohl im spannungsfreien Zustand der Lochscheiben als auch im vorgespannten Zustand während des Betriebs der Vorrichtung und somit bei Schwingungseintrag.

Zur Montage kann das Werkstück beispielsweise in folgender Reihenfolge am Bauteil befestigt werden. Ein Schraubenkopf der Schraube oder ein Gewindeträger, beispielsweise eine Mutter, spannen die erste Lochscheibe gegen das Werkstück. Auf der anderen Seite des Werkstücks liegt die zweite Lochscheibe an. Diese wird mittels des Bauteils mit einem Innengewinde, in welches ein Außengewinde der Schraube fasst, gegen das Werkstück vorgespannt. Alternativ wird das Bauteil zwischen der zweiten Lochscheibe und einem weiteren Gewindeträger, beispielsweise einer Mutter, gegen die zweite Lochscheibe und gegen das Werkstück vorgespannt. Dazu weist dann das Bauteil ebenfalls eine Durchgangsbohrung auf.

Gemäß einer Weiterbildung der Erfindung weist das Werkstück eine erste Ausnehmung zur Aufnahme der ersten Lochscheibe auf, wobei eine erste Grundfläche der ersten Ausnehmung die erste Anlagefläche zur Anlage der ersten Lochscheibe bildet und wobei die erste Ausnehmung derart ausgebildet ist, dass Seitenflächen der ersten Ausnehmung einen vorgegebenen Abstand größer Null zur ersten Lochscheibe in der vorgegebenen, bestimmungsgemäßen Montagelage und im entspannten Zustand der ersten Lochscheibe aufweisen. Analog kann das Werkstück eine zweite Ausnehmung zur Aufnahme der zweiten Lochscheibe aufweisen, wobei eine zweite Grundfläche der zweiten Ausnehmung die zweite Anlagefläche zur Anlage der zweiten Lochscheibe bildet und wobei die zweite Ausnehmung derart ausgebildet ist, dass Seitenflächen der zweiten Ausnehmung einen vorgegebenen Abstand größer Null zur zweiten Lochscheibe in der vorgegebenen, bestimmungsgemäßen Montagelage und im entspannten Zustand der zweiten Lochscheibe aufweisen.

Die erste und/oder die zweite Ausnehmung kann als Sacklochbohrung ausgebildet sein. Bei im Querschnitt kreisförmiger erster und/oder zweiter Lochscheibe weist die als Sacklochbohrung ausgebildete erste Ausnehmung einen Innendurchmesser auf, welcher um ein vorgegebenes Maß größer ist als ein Außendurchmesser der im Querschnitt kreisförmigen ersten Lochscheibe in einem entspannten Zustand. Gleichermaßen kann die als Sacklochbohrung ausgebildete zweite Ausnehmung einen Innendurchmesser aufweisen, welcher um ein vorgegebenes Maß größer ist als ein Außendurchmesser der im Querschnitt kreisförmigen zweiten Lochscheibe in einem entspannten Zustand.

Die Achsen der ersten und/oder zweiten Ausnehmung fallen in der vorgegebenen Montagelage der Lochscheiben mit den Achsen der Lochscheiben zusammen. Dann sind auch die Achsen der jeweiligen Durchgangsbohrungen identisch. Die kreisförmigen Grundflächen der sacklochförmigen Ausnehmungen bilden die Anlageflächen zur Anlage der Lochscheiben, also eine erste Grundfläche der ersten Ausnehmung bildet die erste Anlagefläche zur Anlage der ersten Lochscheibe und/oder eine zweite Grundfläche der zweiten Ausnehmung bildet die zweite Anlagefläche zur Anlage der zweiten Lochscheibe. Die Mantelflächen der Sacklochbohrungen können entsprechend die Seitenflächen der Ausnehmungen bilden. Die Ausnehmungen sind somit begrenzt durch die jeweiligen Anlageflächen und Seitenflächen.

In einem entspannten Zustand der ersten Lochscheibe, also einem spannungsfreien und unverformten Zustand der ersten Lochscheibe, ist die erste Ausnehmung des Werkstücks zur aufzunehmenden, ersten Lochscheibe so dimensioniert, dass sich die erste Lochscheibe aus dem entspannten Zustand in einen durch eine axiale Vorspannung bewirkten, verformten Zustand radial um ein vorgegebenes Maß elastisch ausdehnen kann. Gleiches kann für die zweite Lochscheibe gelten: die zweite Ausnehmung des Werkstücks ist so zur entspannten zweiten Lochscheibe dimensioniert, dass sich diese aus dem entspannten Zustand in einen durch eine axiale Vorspannung bewirkten, verformten Zustand radial um ein vorgegebenes Maß elastisch ausdehnen kann. Die axiale Vorspannung kann dabei mittels der Schraube oder der Gewindestange auf die erste und/oder zweite Lochscheibe eingebracht werden.

Wie oben so könnte auch hier davon gesprochen werden, dass die erste Ausnehmung komplementär zur ersten Lochscheibe ausgebildet ist und/oder, dass die zweite Ausnehmung komplementär zur zweiten Lochscheibe ausgebildet ist.

Die erste und/oder zweite Ausnehmung sind gemäß einer Ausführungsform dabei so tief, dass die erste und/oder zweite Lochscheibe vollständig aufgenommen werden kann. Die erste und/oder zweite Lochscheibe sind bei Anlage an der jeweiligen Anlagefläche in der jeweiligen Ausnehmung versenkt. So kann z.B. die von der jeweiligen Auflagefläche abgewandte, ihr entgegengesetzte Seite der ersten und/oder zweiten Lochscheibe bündig mit dem ersten Werkstück verlaufen oder die Seitenflächen der jeweiligen Ausnehmung ragt über die erste und/oder zweite Lochscheibe hinaus, so dass z.B. auch ein an der ersten Lochscheibe anliegender Schraubenkopf oder Gewindeträger in der ersten Ausnehmung zumindest teilweise mit aufgenommen ist.

Alternativ kann die erste und/oder zweite Ausnehmung derart zur ersten und/oder zweiten Lochscheibe ausgebildet sein, dass die erste und/oder zweite Lochscheibe zumindest teilweise über die entsprechend jeweilige erste und/oder zweite Ausnehmung übersteht. Die Dicke der ersten und/oder zweiten Lochscheibe zwischen ihrer Auflagefläche und der entgegengerichteten Seite ist beispielsweise größer als die Tiefe der ersten und/oder zweiten Ausnehmung, insbesondere am Rand einer derartig ausgebildeten ersten und/oder zweiten Lochscheibe weist sie eine größere Dicke auf als die Höhe der entsprechend jeweiligen Seitenflächen der Ausnehmung.

Der vorgegebene freie Raum in radialer Richtung zur Achse der Durchgangsbohrung durch die erste und/oder zweite Lochscheibe in der vorgegebenen, bestimmungsgemäßen Montagelage und in einem entspannten Zustand der ersten und/oder zweiten Lochscheibe um die erste und/oder zweite Lochscheibe kann dabei über die gesamte Dicke des elastischen Teils der ersten und/oder zweiten Lochscheibe von der ersten und/oder zweiten Auflagefläche bis hin zu ihrer, der entsprechenden ersten und/oder zweiten Auflagefläche entgegengerichteten, Seite, beispielsweise bis zu einer ersten und/oder zweiten Beilagscheibe, der ersten und/oder zweiten Lochscheibe erstrecken, so dass sich die erste und/oder zweite Lochscheibe über diese gesamte Dicke radial ausdehnen kann.

Gemäß einer weiteren Ausgestaltung der Erfindung ist hingegen das Werkstück und die erste Lochscheibe derart zueinander ausgebildet, dass ein Abstand zwischen der ersten Lochscheibe und dem Werkstück in radialer Richtung zur Achse der Durchgangsbohrung durch die erste Lochscheibe in der vorgegebenen, bestimmungsgemäßen Montagelage und in einem entspannten Zustand der ersten Lochscheibe Null ist oder die erste Lochscheibe in radialer Richtung zur Achse der Durchgangsbohrung durch die erste Lochscheibe in der vorgegebenen, bestimmungsgemäßen Montagelage und in einem durch die Schraube oder Gewindestange nicht vorgespannten Zustand der ersten Lochscheibe radial durch das Werkstück vorgespannt ist. Die erste Lochscheibe ist dann radial im Werkstück eingeklemmt. Die Klemmung erfolgt lediglich abschnittsweise. Also nur ein Abschnitt der ersten Lochscheibe, insbesondere des elastisch verformbaren Teils der ersten Lochscheibe, ist durch das Werkstück radial geklemmt. Dieser Abschnitt ist insbesondere klein im Vergleich zu dem Bereich der ersten Lochscheibe, insbesondere des elastisch verformbaren Teils der ersten Lochscheibe, der sich radial frei ausdehnen kann, so dass sich die erste Lochscheibe noch immer in zumindest vorgegebenem Maße elastisch in radialer Richtung verformen kann. In gleicher Art und Weise kann das Werkstück und die zweite Lochscheibe derart zueinander ausgebildet sein, dass ein Abstand zwischen der zweiten Lochscheibe und dem Werkstück in radialer Richtung zur Achse der Durchgangsbohrung durch die zweite Lochscheibe in der vorgegebenen, bestimmungsgemäßen Montagelage und in einem entspannten Zustand der zweiten Lochscheibe Null ist oder die zweite Lochscheibe in radialer Richtung zur Achse der Durchgangsbohrung durch die zweite Lochscheibe in der vorgegebenen, bestimmungsgemäßen Montagelage und in einem durch die Schraube oder Gewindestange nicht vorgespannten Zustand der zweiten Lochscheibe radial durch das Werkstück vorgespannt, und somit abschnittsweise radial im Werkstück geklemmt gehalten ist. Werkstück und erste und/oder zweite Lochscheibe weisen somit eine Übergangs- oder Presspassung im Bereich zur Aufnahme zumindest des elastisch verformbaren Teils der ersten und/oder zweiten Lochscheibe auf. Insbesondere ist ein Abstand zwischen den Seitenflächen der ersten und/oder zweiten Ausnehmung und zumindest dem elastisch verformbaren Teil der ersten und/oder zweiten Lochscheibe gleich oder kleiner Null (Klemmung) in der vorgegebenen, bestimmungsgemäßen Montagelage und in einem durch die Schraube oder Gewindestange nicht vorgespannten Zustand der ersten und/oder zweiten Lochscheibe. Es besteht weiterhin ein freier Raum in radialer Richtung um die erste und/oder zweite Lochscheibe, so dass sich die erste und/oder zweite Lochscheibe in zumindest vorgegebenem Maße elastisch in radialer Richtung verformen kann. Der vorgegebene freie Raum in radialer Richtung zur Achse der Durchgangsbohrung durch die erste und/oder zweite Lochscheibe in der vorgegebenen, bestimmungsgemäßen Montagelage und im entspannten Zustand der ersten und/oder zweiten Lochscheibe erstreckt sich somit nicht über die vollständige Dicke und/oder Umfang zumindest des elastischen Teils der ersten und/oder zweiten Lochscheibe zwischen ihrer ersten und/oder zweiten Auflagefläche und der der entsprechenden ersten oder zweiten Auflagefläche entgegengerichteten Seite der Lochscheibe. Dies kann beispielsweise durch wenigstens eine oder insbesondere mehrere in die Ausnehmung ragenden Nasen oder andersartig ausgeformten Vorsprüngen in den Seitenflächen der ersten und/oder zweiten Ausnehmung realisiert werden. Auch eine als Vorsprung wirkende ringförmige Erhöhung in den Seitenflächen soll hier mit umfasst gelten. Zusätzlich oder alternativ sind auch gleichwirkende radiale Ausstülpungen der ersten und/oder zweiten Lochscheibe denkbar.

Durch diese Klemmung wird zusätzlich eine Verdrehung der ersten und/oder zweiten Lochscheibe und des Werkstückes zueinander erschwert oder verhindert.

Die erfindungsgemäße Vorrichtung umfasst mit dem Werkstück, den Lochscheiben und der Schraube oder der Gewindestange mehrere Einzelteile oder Komponenten, so dass auch von einem Bau- oder Montagesatz oder -kit zur lösbaren, schwingungsdämpfenden Verbindung des Werkstücks mit dem Bauteil bzw. einer lösbaren, schwingungsgedämpften Anbindung des Werkstücks an dem Bauteil gesprochen werden könnte.

Die Erfindung vereinfacht die Anbindung von Werkstücken, insbesondere mit niedrigen Dauerfestigkeiten, in ungedämpften Bereichen von Fahrzeugen und erhöht gleichzeitig deren Lebensdauer. Die Einsatzfähigkeit, Funktionstüchtigkeit und Tauglichkeit, insbesondere von additiv gefertigten Werkstücken in ungedämpften Bereichen von Fahrzeugen wird dadurch gegeben und somit die Verfügbarkeit von Werkstücken insgesamt verbessert. Betriebslasten werden verteilt eingebracht, um den Spannungseintrag aufgrund von Verschraubungen in additiven Werkstücken zu reduzieren. Weitere Vorteile der Erfindung sind:
- die Lochscheiben als Dämpfungselemente schmiegen sich an die Kontur des Werkstücks an und erzeugen damit eine gleichmäßig verteilte Haltekraft in allen Raumrichtungen und eine auf eine größere Fläche verteilte Haltekraft, mit daher kleineren Flächenlasten;
- ein gleichmäßig verteilter Krafteintrag sorgt für niedrigere lokale Spannungsspitzen, was zu einer höheren Lebensdauer führt;
- eine Schwingungsdämpfung ist in allen 3 Raumrichtungen ermöglicht;
- bei additiven Werkstücken wird die Krafteinleitung auf verschiedene Schichten verteilt, wodurch eine geringere Gefahr kritischer Belastungen an Schichtübergängen mit niedriger Festigkeit besteht.

Darüber hinaus werden die Nachteile überwunden, dass bei üblichen Verschraubungen örtliche Spannungen ins Bauteil eingebracht werden, die sich durch die Betriebslasten noch weiter erhöhen. Verschraubungen von Kunststoffteilen waren daher oft das festigkeitsbegrenzende bzw. lebensdauerbestimmende Element an Bauteilen. Anschraubpunkte waren somit in der Regel die kritischen, lebensdauerbestimmenden Bereiche für additiv gefertigte Bauteile, weil örtlich konzentriert Spannungen ins Bauteil eingeleitet werden. Vor allem Bereiche, die Stößen und Schwingungen ausgesetzt, z.B. am Drehgestell eines Schienenfahrzeugs, waren bisher kritisch für den Einsatz additiv gefertigter Bauteile. Mit der Erfindung ist der Einsatz von nun vielen weiteren, verschiedenen Werkstückwerkstoffen möglich. Auch zyklische Betriebslasten, Schwingungen und Stöße lassen sich ohne örtliche Materialschädigung durch vermiedene Spannungsspitzen realisieren.

Die nachfolgend beschriebenen Merkmale und Merkmalskombinationen dienen zur weiteren Verbesserung der genannten Aspekte.

So weist gemäß der Erfindung die erste Lochscheibe eine erste Hülse in einer Durchgangsbohrung durch einen elastisch verformbaren Teil der ersten Lochscheibe zur Durchführung der Schraube oder der Gewindestange auf, welche eine Verformung des elastisch verformbaren Teils der ersten Lochscheibe in radialer Richtung zur Achse der Durchgangsbohrung der ersten Lochscheibe hin begrenzt. Analog weist auch die zweite Lochscheibe eine zweite Hülse in einer Durchgangsbohrung durch einen elastisch verformbaren Teil der zweiten Lochscheibe zur Durchführung der Schraube oder der Gewindestange auf, welche eine Verformung des elastisch verformbaren Teils der zweiten Lochscheibe in radialer Richtung zur Achse der Durchgangsbohrung der zweiten Lochscheibe hin begrenzt. Die erste und/oder zweite Hülse ist im Vergleich zum elastischen Werkstoff des elastisch verformbaren Teils der ersten und/oder zweiten Lochscheibe fest ausgebildet und insbesondere aus einem Metall oder aus einer Metalllegierung gefertigt. Sie kann rohrförmig hohlzylindrisch zur Durchführung der Schraube oder der Gewindestange ausgebildet sein. Die jeweilige Hülse gibt einen Raum zur Durchführung der Schraube oder der Gewindestange frei und begrenzt somit die Durchgangsbohrung durch die jeweilige Lochscheibe zur Durchführung der Schraube oder der Gewindestange. Die Schraube oder Gewindestange ist dann durch die Hülse in der jeweiligen Lochscheibe geführt. Die erste und/oder zweite Hülse kann stoffschlüssig mit dem jeweiligen elastisch verformbaren Teil der ersten und/oder zweiten Lochscheibe verbunden sein und somit mit dem elastisch verformbaren Teil ein sogenanntes Gummi-Metall-Element ausbilden. Die relativ steife erste und/oder zweite Hülse wirkt einer Ausdehnung unter axialer Vorspannung des elastisch verformbaren Teils der ersten und/oder zweiten Lochscheibe in radialer Richtung, also in die jeweilige Durchgangsbohrung hinein entgegen und begrenzt diese.

Fürderhin ist vorgesehen, dass die erste Hülse derart über die erste Auflagefläche der ersten Lochscheibe zur Anlage der ersten Lochscheibe an der ersten Anlagefläche des Werkstücks in vorgegebenem Maße größer Null übersteht, so dass die erste Hülse in vorgegebener, bestimmungsgemäßer Montagelage der ersten Lochscheibe in die Durchgangsbohrung im Werkstück in vorgegebenem Maße größer Null hineinragt. Analog steht die zweite Hülse derart über die zweite Auflagefläche der zweiten Lochscheibe zur Anlage der zweiten Lochscheibe an der zweiten Anlagefläche des Werkstücks in vorgegebenem Maße größer Null über, so dass die zweite Hülse in vorgegebener, bestimmungsgemäßer Montagelage der zweiten Lochscheibe in die Durchgangsbohrung im Werkstück in vorgegebenem Maße größer Null hineinragt.

Zur Aufnahme der ersten und/oder zweiten Hülse ist der Durchmesser der Durchgangsbohrung des Werkstücks zumindest gleich groß oder größer als der Außendurchmesser der ersten und/oder Hülse. Der Innendurchmesser der ersten und/oder zweiten Hülse und damit der Durchmesser der Durchgangsbohrung der ersten und/oder zweiten Lochscheibe ist, wie oben bereits ausgeführt, zumindest geeignet gewählt zur Durchführung der Schraube oder Gewindestange.

Es weist sowohl die erste Lochscheibe eine erste Hülse auf als auch die zweite Lochscheibe eine zweite Hülse. Dabei ragt in vorgegebener, bestimmungsgemäßer Montagelage der ersten und der zweiten Lochscheibe die erste Hülse und die zweite Hülse in die Durchgangsbohrung des Werkstücks in hinein.

In einer weiteren Weiterbildung weist zumindest die erste Lochscheibe eine, insbesondere hohlzylindrische, erste Ausstülpung des elastisch verformbaren Teils auf, welche erste Ausstülpung über die erste Auflagefläche der ersten Lochscheibe zur Anlage der ersten Lochscheibe an der ersten Anlagefläche des Werkstücks in vorgegebenem Maße größer Null übersteht, so dass die erste Ausstülpung in vorgegebener, bestimmungsgemäßer Montagelage der ersten Lochscheibe in die Durchgangsbohrung im Werkstück in vorgegebenem Maße größer Null hineinragt auf. Auch die zweite Lochscheibe kann eine derartige, insbesondere hohlzylindrische, zweite Ausstülpung des elastisch verformbaren Teils der zweiten Lochscheibe aufweisen, welche zweite Ausstülpung über die zweite Auflagefläche der zweiten Lochscheibe in vorgegebenem Maße größer Null übersteht, so dass die zweite Ausstülpung in vorgegebener, bestimmungsgemäßer Montagelage der zweiten Lochscheibe in die Durchgangsbohrung im Werkstück in vorgegebenem Maße größer Null hineinragt. Die erste und/oder zweite Ausstülpung ist insbesondere aus demselben elastisch verformbaren Material hergestellt wie der jeweilige, elastisch verformbare Teil der ersten und/oder zweiten Lochscheibe und ist fügestellenfrei mit diesem verbunden. Insbesondere ist der elastisch verformbare Teil der ersten und/oder zweiten Lochscheibe und die jeweilige erste und/oder zweite Ausstülpung monolithisch ausgebildet. Die erste und/oder zweite Ausstülpung weist eine Durchgangsbohrung zur Aufnahme der Schraube oder Gewindestange auf, welche insbesondere denselben Innendurchmesser aufweist, wie der entsprechende elastisch verformbare Teil der ersten und/oder zweiten Lochscheibe. Gleichermaßen kann die erste und/oder zweite Hülse von der jeweils entsprechenden ersten und/oder zweiten Ausstülpung eingefasst sein. Die erste und/oder zweite Ausstülpung begrenzt also somit die erste und/oder zweite Lochscheibe nach Innen zur Achse der Durchgangsbohrung hin und der Innendurchmesser der erste und/oder zweiten Ausstülpung ist geeignet gewählt zur Durchführung der Schraube oder Gewindestange oder in der ersten und/oder zweiten Ausstülpung ist die entsprechende erste und/oder zweite Hülse gefasst, welche Ihrerseits die jeweilige Durchgangsbohrung der ersten und/oder zweiten Lochscheibe zur Aufnahme der Schraube oder Gewindestange nach Innen zur Achse der Durchgangsbohrung hin begrenzt.

Wie oben bereits ausgeführt kann die Durchgangsbohrung des Werkstücks größer als die Durchgangsbohrung der Lochscheiben sein, insbesondere zur Aufnahme von Hülse und/oder Ausstülpung.

Eine Wandstärke des Werkstücks im Bereich der Durchgangsbohrung durch das Werkstücks zwischen der ersten Anlagefläche und der zweiten Anlagefläche ist derart auf die erste und die zweite in die Durchgangsbohrung des Werkstücks hineinragenden Lochscheiben abgestimmt, dass in vorgegebener, bestimmungsgemäßer Montagelage der ersten und der zweiten Lochscheibe und im entspannten Zustand der ersten und der zweiten Lochscheibe zwischen den beiden sich gegenüberliegenden Stirnseiten der ersten und zweiten Lochscheiben im Bereich der Durchgangsbohrung durch das Werkstück ein vorgegebener Abstand größer Null in axialer Richtung ausgebildet ist. Weisen sowohl die erste als auch die zweite Lochscheibe jeweils eine Hülse und/oder eine Ausstülpung auf, so liegen sich deren in der Durchgangsbohrung des Werkstücks angeordneten Stirnseiten gegenüber und bilden den vorgegebenen Abstand größer Null in axialer Richtung aus. Es könnte auch von einem axialen Spalt in der Durchgangsbohrung des Werkstücks zwischen den Stirnseiten der ersten und der zweiten Lochscheibe gesprochen werden.

In einer weiteren Weiterbildung sind die erste und die zweite Lochscheibe derart ausgestaltet, dass sich der Abstand vorgegebenen Maßes größer Null zwischen den sich gegenüberliegenden Stirnseiten der ersten und zweiten Lochscheiben im Bereich der Durchgangsbohrung in vorgegebener, bestimmungsgemäßer Montagelage der ersten und der zweiten Lochscheibe und im entspannten Zustand der ersten und der zweiten Lochscheibe durch das Aufbringen einer vorgegebenen Vorspannung mittels der Schraube oder der Gewindestange und einer dadurch bewirkten elastischen Verformung der ersten und der zweiten Lochscheibe schließen lässt. Der Abstand bzw. Spalt zwischen den Lochscheiben lässt sich einstellen und damit vorgeben durch Auswahl der konstruktiven Ausgestaltung, insbesondere der Bemaßung, und der Werkstoffe und damit ihrer physikalischen Eigenschaften der ersten und der zweiten Lochscheibe.

Gemäß einer weiteren Weiterbildung der Vorrichtung sind
- der axiale Abstand zwischen den beiden sich gegenüberliegenden Stirnseiten der ersten und zweiten Lochscheibe im Bereich der Durchgangsbohrung durch das Werkstück und
- der freie Raum um die erste und/oder zweite Lochscheibe in radialer Richtung zur Achse der Durchgangsbohrung durch das Werkstück in der vorgegebenen, bestimmungsgemäßen Montagelage der ersten und/oder zweiten Lochscheibe und in einem entspannten Zustand der ersten und/oder zweiten Lochscheibe
in gegenseitiger Abhängigkeit und in weiterer Abhängigkeit von
- der Festigkeit, beispielsweise einer Shore-Härte oder vergleichbaren Festigkeitskennwerten, insbesondere zumindest des elastisch verformbaren Teils, der ersten und/oder zweiten Lochscheibe und
- einer mittels der Schraube oder der Gewindestange aufgebrachten, axialen Vorspannkraft
vorgegeben. Die Abstimmung erfolgt insbesondere so, dass eine vorgegebene, elastische Verformung der ersten und/oder zweiten Lochscheibe in radialer und/oder in axialer Richtung nicht überschritten wird. Die mittels der Schraube oder der Gewindestange aufgebrachte, axiale Vorspannkraft wird dabei vorgegeben. Sie ist derart vorgegeben, dass eine sichere Montage auch während des Betriebs gewährleistet ist.

Beispielsweise ist der Abstand von sich gegenüberliegenden, in der Durchgangsbohrung des Werkstücks angeordneten Stirnseiten der ersten und zweiten Hülse und die freien Räume in radialer Richtung um die erste und zweite Lochscheibe zu den Achsen der Durchgangsbohrungen durch die erste und die zweite Lochscheibe in gegenseitiger Abhängigkeit und in weiterer Abhängigkeit von den Festigkeiten der ersten und zweiten Lochscheibe und von der mittels der Schraube oder der Gewindestange aufgebrachten, vorgegebenen Vorspannkraft vorgegeben.

Weitergebildet ist der Abstand von den Seitenflächen der ersten Ausnehmung zur ersten Lochscheibe in der vorgegebenen, bestimmungsgemäßen Montagelage und im entspannten Zustand der ersten Lochscheibe in Abhängigkeit der Festigkeit der ersten Lochscheibe derart vorgegeben ist, dass bei einer mittels der Schraube oder der Gewindestange aufgebrachten, vorgegebenen Vorspannkraft die dadurch elastisch verformte erste Lochscheibe an den Seitenflächen der ersten Ausnehmung anliegt. Analog kann der Abstand von den Seitenflächen der zweiten Ausnehmung zur zweiten Lochscheibe in der vorgegebenen, bestimmungsgemäßen Montagelage und im entspannten Zustand der zweiten Lochscheibe in Abhängigkeit der Festigkeit der zweiten Lochscheibe derart vorgegeben sein, dass bei einer mittels der Schraube oder der Gewindestange aufgebrachten, vorgegebenen Vorspannkraft die dadurch elastisch verformte zweite Lochscheibe an den Seitenflächen der zweiten Ausnehmung anliegt. Wie oben bereits ausgeführt kann dies in weiterer Abhängigkeit von dem Abstand der sich gegenüberliegenden, in der Durchgangsbohrung des Werkstücks angeordneten Stirnseiten der ersten und zweiten Hülse und gegebenenfalls in weiterer Abhängigkeit von den Festigkeiten, beispielsweise Shore-Härten, der ersten und zweiten Lochscheibe, bzw. zumindest von den jeweils elastisch verformbaren Teilen der ersten und zweiten Lochscheibe, und von der mittels der Schraube oder der Gewindestange axial aufgebrachten, vorgegebenen Vorspannkraft erfolgen.

Weitere Vorteile der Erfindung, insbesondere bei Vorhandensein wenigstens einer Hülse, sind ein einstellbares Verhältnis der Vorspannkraft der Schraubverbindung zur Anpresskraft der Lochscheiben über den Abstand der sich gegenüberliegenden, in der Durchgangsbohrung des Werkstücks angeordneten Stirnseiten der ersten und zweiten Lochscheibe (Klemmspalt). Die Vorspannkraft der Schraubverbindung mittels der Schraube oder Gewindestange und damit die Klemmkraft kann bis zur Belastungsgrenze der Schraube oder Gewindestange gesteigert werden. Es besteht kein Problem mehr wegen eines Setzverlust des Kunststoffs des Werkstücks. Zusätzliche Schraubensicherungen wie Keilscheiben, Federringe o.ä. können unabhängig vom Setzverhalten des additiven Kunststoffs des Werkstücks eingesetzt werden.

Zur weiteren Verbesserung sind folgende Weiterbildungen der erfindungsgemäßen Vorrichtung vorgeschlagen.

So ist gemäß einer weiteren Weiterbildung vorgesehen, dass zumindest die erste Lochscheibe eine feste erste Beilagscheibe zur Anlage eines Schraubenkopfs der Schraube oder zur Anlage eines Gewindeträgers, beispielsweise einer Mutter, zur Verschraubung mit der Gewindestange umfasst, welche erste Beilagscheibe in vorgegebener, bestimmungsgemäßer Montagelage der ersten Lochscheibe auf einer, der ersten Auflagefläche der ersten Lochscheibe entgegengesetzten Seite der ersten Lochscheibe angeordnet ist. Die erste Beilagscheibe weist eine hohe Festigkeit auf und ist somit im Vergleich zum elastischen Teil der ersten Lochscheibe starr ausgebildet. Sie umfasst insbesondere ein Metall oder eine Metalllegierung und wirkt einer Verformung es elastisch verformbaren Teils der ersten Lochscheibe in axialer Richtung zur ersten Beilagscheibe hin entgegen und begrenzt diese. Darüber hinaus bewirkt die erste Beilagscheibe eine gleichmäßige Krafteinleitung und Kraftverteilung einer durch den Schraubenkopf oder einen Gewindeträger aufgebrachten Vorspannkraft in die erste Lochscheibe. Sie dient also einer verbesserten und in der Fläche verteilten Krafteinleitung in die erste Lochscheibe. Die erste Beilagscheibe ist fest, insbesondere stoffschlüssig, mit dem elastischen Teil der ersten Lochscheibe verbunden, beispielsweise verklebt. Analog kann die zweite Lochscheibe eine feste, insbesondere stoffschlüssig mit dem elastischen Teil der zweiten Lochscheibe verbundene, zweite Beilagscheibe, insbesondere aus einem Metall oder aus einer Metalllegierung, zur Anlage eines Schraubenkopfs der Schraube oder zur Anlage eines Gewindeträgers, beispielsweise einer Mutter, zur Verschraubung mit der Gewindestange umfassen, welche zweite Beilagscheibe in vorgegebener, bestimmungsgemäßer Montagelage der zweiten Lochscheibe auf einer, der zweiten Auflagefläche der zweiten Lochscheibe entgegengesetzten Seite der zweiten Lochscheibe angeordnet ist.

Weitergebildet erstreckt sich die erste und/oder zweite Beilagscheibe über die gesamte, der entsprechenden ersten und/oder zweiten Auflagefläche entgegengesetzten Oberfläche der entsprechenden ersten und/oder zweiten Lochscheibe.

Weitergebildet ist die erste Beilagscheibe und die erste Hülse fest, insbesondere stoffschlüssig, miteinander verbunden, insbesondere fügestellenfrei. Die erste Hülse und die erste Beilagscheibe können auch monolithisch ausgebbildet sein. So könnte ein Grundkörper der ersten Beilagscheibe und der ersten Hülse aus einem Guss hergestellt sein. Die erste Beilagscheibe könnte auch als radialer Kragen der ersten Hülse bezeichnet werden. Das gesamte Konstrukt aus erster Beilagscheibe und erster Hülse könnte als hohlzylindrischer Stopfen, Achshülse oder Buchse bezeichnet werden. Gleicherma-ßen können die zweite Beilagscheibe und die zweite Hülse ausgeformt sein.

Des Weiteren kann vorgesehen sein, dass zumindest auch die erste Auflagefläche der ersten Lochscheibe fest ausgebildet ist. Analog kann auch die zweite Auflagefläche der zweiten Lochscheibe fest ausgebildet sein. Hierzu kann wiederum die erste und/oder zweite Lochscheibe eine feste, insbesondere ein Metall oder eine Metalllegierung umfassende, insbesondere aus einem Metall oder einer Metalllegierung gefertigte, erste und/oder zweite Unterlegscheibe aufweisen, welche mit dem entsprechenden elastisch verformbaren Teil der ersten und/oder zweiten Lochscheibe fest, insbesondere stoffschlüssig verbunden ist, beispielsweise verklebt. Die erste und/oder zweite Unterlegscheibe bildet dann jeweils die entsprechende erste und/oder zweite Auflagefläche der ersten und/oder zweiten Lochscheibe zur Anlage entsprechenden ersten und/oder zweiten Lochscheibe an der entsprechenden ersten und/oder zweiten Anlagefläche des Werkstücks. Die erste und/oder zweite Unterlegscheibe sorgt analog zur ersten und/oder zweiten Beilagscheibe wiederum für eine gleichmäßige Krafteinleitung in die jeweilige Lochscheibe. Wie oben bereits ausgeführt ist die durch die ersten und/oder zweite Unterlegscheibe gebildete erste und/oder zweite Auflagefläche komplementär zur entsprechenden ersten und/oder zweiten Anlagefläche des Werkstücks ausgebildet für eine flächige Anlage der ersten und/oder zweiten Lochscheibe am Werkstück.

Die erste Unterlegscheibe kann auch einen, in der vorgegebenen, bestimmungsgemäßen Montagelage der ersten Lochscheibe, zumindest teilweise in die Durchgangsbohrung im Werkstück hineinragenden, hohlzylindrischen ersten Kragen aufweisen. Der erste Kragen kann somit als erste äußere Hülse für die erste Ausstülpung dienen und diese zumindest teilweise umschließen. Er ist zum Einsatz ist die Durchgangsbohrung des Werkstücks vorgesehen und mit dieser eine Passung bilden. Sein Außendurchmesser wäre dann nur minimal kleiner oder gleich groß wie der Außendurchmesser der Durchgangsbohrung des Werkstücks im Bereich des ersten Kragens. Auch der erste Kragen kann mit der ersten Ausstülpung des elastisch verformbaren Teils der ersten Lochscheibe stoffschlüssig verbunden sein, beispielsweise verklebt. Insbesondere ist der erste Kragen stoffschlüssig, insbesondere fügestellenfrei mit der ersten Unterlegscheibe verbunden, insbesondere aus dieser ausgeformt. Gleichermaßen kann die zweite Unterlegscheibe kann auch einen, in der vorgegebenen, bestimmungsgemäßen Montagelage der zweiten Lochscheibe, zumindest teilweise in die Durchgangsbohrung im Werkstück hineinragenden, hohlzylindrischen zweiten Kragen aufweisen. Auch die weiteren beschriebenen Merkmale bezüglich der ersten Lochscheibe sind auf die zweite Lochscheibe analog anwendbar.

Die Erfindung lässt zahlreiche Ausführungsformen zu. Sie wird anhand der nachfolgenden Figur näher erläutert, in welcher ein Ausgestaltungsbeispiel dargestellt ist.

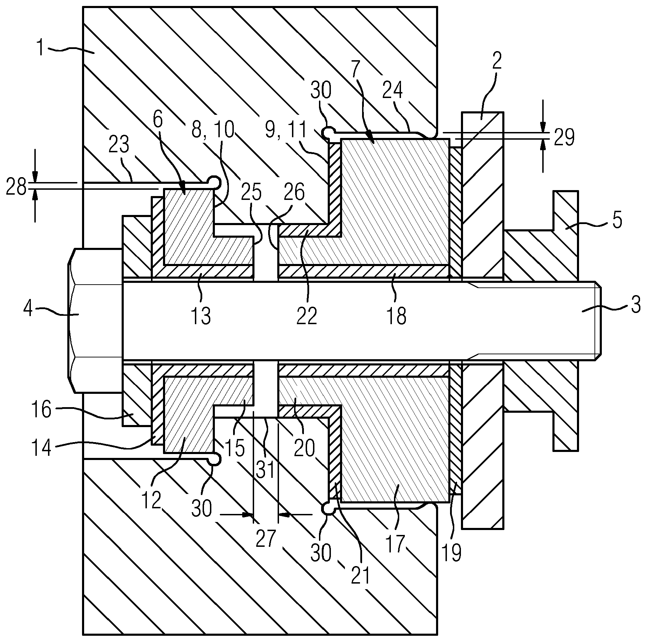

In der Figur ist eine erfindungsgemäße Vorrichtung zur lösbaren schwingungsdämpfenden Verbindung eines Werkstücks 1 mit einem Bauteil 2 schematisch im Teilschnitt dargestellt. Das Bauteil 2 ist hier ein Fahrwerk eines Schienenfahrzeugs. Das Werkstück 1 ist eine Abdeckung oder ein anderer Verkleidungsteil für das Fahrwerk. Es ist mittels einer Schraubverbindung, hier umfassend eine Schraube 3 mit Schraubenkopf 4 und einer Käfigmutter als Gewindeträger 5, am Bauteil 2 lösbar montiert und verspannt. Die Käfigmutter bildet als Gewindeträger 5 das mit einem Innengewinde versehene Gegenstück zum Schraubenkopf 4 und ist komplementär zur Schraube 3 ausgebildet.

Das Werkstück 1 sowie auch das Bauteil 2 weist eine Durchgangsbohrung 31 zur Durchführung der Schraube 3 auf. Darüber hinaus weist die Vorrichtung zwei Lochscheiben 6 und 7 auf, die im dargestellten montierten Zustand in vorgegebener Montagelage mit ihren Auflageflächen 8 und 9 an Anlageflächen 10 und 11 des Werkstücks 1 im Bereich der Durchgangsbohrung 31 durch das Werkstück 1 anliegen.

Die erste Lochscheibe 6 umfasst dabei einen schwingungsdämpfenden, elastisch verformbaren Teil 12, eine erste Hülse 13 sowie eine erste Beilagscheibe 14. Der elastisch verformbare Teil 12 ist aus einem Elastomer, beispielsweise Gummi, hergestellt.

Die erste Beilagscheibe 14 kann mit dem elastisch verformbaren Teil 12 fest verbunden sein. Sie ist auf einer der ersten Auflagefläche 10 der ersten Lochscheibe 6 entgegengesetzten Seite der ersten Lochscheibe 6 und damit in der gezeigten Montagelage dem der ersten Auflagefläche 8 des Werkstücks 1 und der Durchgangsbohrung 31 durch das Werkstück 1 abgewandten Seite der ersten Lochscheibe 6 angeordnet. Der Schraubenkopf 4 liegt hier unter Zwischenlage von Sicherungsscheiben 16 an der ersten Beilagscheibe 14 der ersten Lochscheibe 6 an. Über die erste Beilagscheibe 14 werden die durch den Schraubenkopf 4 auf die erste Lochscheibe 6 einwirkenden Kräfte gelichmäßig in den elastisch verformbaren Teil 12 verteilt.

Dier erste Hülse 13 ist in diesem Ausführungsbeispiel aus der ersten Beilagscheibe 14 ausgeformt oder umgekehrt, d.h. die erste Hülse 13 ist mit der ersten Beilagscheibe 14 fügestellenfrei verbunden bzw. monolithisch ausgebildet. Die erste Hülse 13 ist zur Durchführung der Schraube 3 rohrförmig ausgebildet und erstreckt sich montierten Zustand der Vorrichtung zumindest teilweise in die Durchgangsbohrung 31 des Werkstücks 1 - sie steht mit einem Maß größer Null über die erste Auflagefläche 8 über und ragt somit mit dem überstehenden Bereich in die Durchgangsbohrung 31 hinein. Die erste Hülse 13 ist, wie die erste Beilagscheibe auch, aus einem metallischen Werkstoff hergestellt und wirkt einer Verformung des elastisch verformbaren Teils 12 der ersten Lochscheibe 6 in radialer Richtung zur Achse der Durchgangsbohrung 31 hin entgegen und begrenzt diese. Auch sie kann mit dem elastisch verformbaren Teil 12 der ersten Lochscheibe 6 verklebt sein.

Der elastisch verformbare Teil 12 weist die erste Ausstülpung 15 auf. Auch die erste Ausstülpung 15 steht mit einem Maß größer Null über die erste Auflagefläche 8 über und ragt in die Durchgangsbohrung 31 hinein. In diesem Ausführungsbeispiel ist die erste Ausstülpung 15 gleich bemessen wie der über die erste Auflagefläche 8 überstehende Bereich der ersten Hülse 13. Die erste Ausstülpung bildet hier also zusammen mit der ersten Hülse 13 die in der veranschaulichten Montagelage der Vorrichtung in die Durchgangsbohrung hineinragende erste Stirnseite 25 der ersten Lochscheibe 6. Die erste Ausstülpung 15 ist ebenfalls hohlzylindrisch ausgeformt. Ihr Außendurchmesser ist gleich groß oder kleiner als der Innendurchmesser der Durchgangsbohrung 31 - hier ein wenig kleiner für ein kleines radiales Spiel zwischen Durchgangsbohrung 31 und erster Lochscheibe 6. Neben einer Spielpassung ist aber auch eine Übergangs- oder Presspassung denkbar. Der Innendurchmesser der ersten Ausstülpung 15 ist wiederum ungefähr gleich groß wie der Außendurchmesser der ersten Hülse 13.

Die zweite Lochscheibe 7 umfasst einen schwingungsdämpfenden, elastisch verformbaren Teil 17, eine zweite Hülse 18, eine zweite Beilagscheibe 19 und eine zweite Unterlegscheibe 21 mit einem Kragen 22.

Die zweite Beilagscheibe 19 ist auf einer der zweiten Auflagefläche 9 der zweiten Lochscheibe 7 entgegengesetzten Seite und damit in der gezeigten Montagelage der zweiten Anlagefläche 11 des Werkstücks 1 abgewandten Seite der zweiten Lochscheibe 7 angeordnet. Die Käfigmutter als Gewindeträger 5 liegt hier an der zweiten Beilagscheibe 19 an. Analog zu oben überträgt die zweite Beilagscheibe 19 die auftretenden Kräfte des Gewindeträgers 5 zuverlässig auf den Untergrund - hier den elastischen Teil 17 der zweiten Lochscheibe 7. Die zweite Beilagscheibe 19 ist in diesem Ausführungsbeispiel jedoch nicht mit der zweiten Hülse 18 verbunden. Es besteht ein kleiner Spalt zwischen der zweiten Hülse 18 und der zweiten Beilagscheibe 19. Die zweite Hülse 18 sowie auch die zweite Beilagscheibe 19 sind nur jeweils mit dem elastisch verformbaren Teil 17 verbunden.

Auch die zweite Hülse 18 steht über die zweite Auflagefläche 11 über und ragt im montierten Zustand in die Durchgangsbohrung 31 durch das Werkstücks 1 hinein. Wie bei der ersten Lochscheibe 6 so weist auch die zweite Lochscheibe 7 eine Ausstülpung 20 des elastisch verformbaren Teils 17 auf, welcher ebenfalls in die Durchgangsbohrung 31 hineinragt und welcher die zweite Hülse 18 zumindest teilweise umgibt.

Darüber hinaus ist die zweite Auflagefläche 9 der zweiten Lochscheibe 7 zumindest abschnittsweise durch eine im Querschnitt ringförmige Unterlegscheibe 21 gebildet, welche wiederum mit dem elastischen Teil 17 verbunden sein kann, beispielsweise über eine Klebeverbindung. Die Unterlegscheibe weist einen Kragen 22 auf, der von der zweiten Beilagscheibe 19 weg weist und somit wiederum in die Durchgangsbohrung 31 hineinragt und welcher die zweite Ausstülpung 20 zumindest teilweise umschließt. Der Kragen 22 ist entsprechend rohrförmig ausgeformt und kann mit der Durchgangsbohrung eine Spiel- oder Übergangspassung eingehen. Unterlegscheibe 21 und Kragen 22 können wiederum einstückig, beispielsweise als Press- oder Tiefziehteil, gefertigt sein.

Kragen 22 und zweite Ausstülpung 20 stehen in diesem Ausführungsbeispiel nicht so weit über wie die zweite Hülse. Nur die zweite Hülse 18 bildet daher die in der veranschaulichten Montagelage der Vorrichtung in die Durchgangsbohrung 31 hineinragende zweite Stirnseite 26 der zweiten Lochscheibe 7.

In der vorgegebenen, bestimmungsgemäßen Montagelage und in einem entspannten Zustand der Lochscheiben 6 und 7, also noch ohne durch die Schraubverbindung aufgebrachte axiale Vorspannung mittels der Schraube 3 und dem Gewindeträger 5, beträgt ein Abstand 27 der zweiten Stirnseite 26 der zweiten Hülse 18 zur ersten Stirnseite 25 der ersten Lochscheibe 6 ein vorgegebenes Maß größer Null. Auf diesen Abstand 27, auch als Klemmpalt zu bezeichnen, wird unten noch näher eingegangen.

Aufgrund der hier gezeigten Bauart können die Lochscheiben 6 und 7 als Gummi-Metall-Elemente bezeichnet werden.

Das Werkstück 1 weist eine erste Ausnehmung im Bereich der Durchgangsbohrung 31 zur Aufnahme der ersten Lochscheibe 6 sowie eine zweite Ausnehmung im Bereich der Durchgangsbohrung 31 zur Aufnahme der zweiten Lochscheibe 7 auf. Die Grundfläche der ersten Ausnehmung dient als erste Anlagefläche 10 zur Anlage der ersten Lochscheibe 6 mit ihrer Auflagefläche 8. Die Seitenflächen 23 der ersten Ausnehmung begrenzen eine mögliche radiale Ausdehnung der ersten Lochscheibe 6. Sie umranden die erste Lochscheibe 6 zumindest teilweise. Im Bereich der ersten Anlagefläche 10 weisen die ersten Seitenflächen 23 einen Freistich 30 auf. Analog ist im Stoßbereich der Grundfläche der zweiten Ausnehmung, welche Grundfläche als zweite Anlagefläche 11 komplementär zur zweiten Auflagefläche 9 der zweiten Lochscheibe ausgebildet ist, mit den zweiten Seitenflächen 24 der zweiten Ausnehmung ein Freistich 30 vorgesehen.

Ohne Freistiche 30 könnten die Ausnehmungen auch als Sacklochbohrungen beschrieben werden, mit im Wesentlichen ebenen, durch die Durchgangsbohrung 31 durchbrochenen Böden als Anlageflächen und mit Innendurchmessern größer als die Außendurchmesser der aufzunehmenden Lochscheiben. In der vorgegebenen, bestimmungsgemäßen Montagelage und in einem entspannten Zustand der Lochscheiben 6 und 7 fallen die Achsen der Sacklochbohrungen sowie der Durchgangsbohrung 31 durch das Werkstück als auch die Durchgangsbohrungen durch die zentrisch in der jeweiligen Ausnehmung aufgenommenen und ausgerichteten Lochscheiben zusammen.

Um eine freie Ausdehnung in radialer Richtung zumindest der elastisch verformbaren Teile 12 und 17 der ersten und der zweiten Lochscheibe 6 und 7 zu ermöglichen, besteht ein freier Raum in radialer Richtung zur Achse der Durchgangsbohrungen durch die Lochscheiben 6 und 7. Hier haben die erste und zweite Lochscheibe 6 und 7 in der vorgegebenen, bestimmungsgemäßen Montagelage und in einem entspannten Zustand der Lochscheiben 6 und 7 ein radiales Spiel in den jeweiligen Ausnehmungen im Werkstück 1. Die Abstände 28 und 29 zwischen der ersten Lochscheibe 6 und der ersten Seitenfläche 23 sowie zwischen der zweiten Lochscheibe 7 und der zweiten Seitenfläche 24 weisen jeweils ein vorgegebenes Maß größer Null auf.

Dieses Maß kann jeweils so gewählt sein, dass bei einer mittels der Schraube 3 über den Schraubenkopf 4 und den Gewindeträger 5 aufgebrachten, vorgegebenen axialen Vorspannkraft die dadurch radial elastisch verformten erste und zweite Lochscheibe 6 und 7 jeweils an den entsprechenden ersten und zweiten Seitenflächen 23 und 24 der Ausnehmungen anliegen. Die elastische Verformung in radialer Richtung wird durch die Vorspannung in axialer Richtung bewirkt. Die freie radiale Ausdehnung der Lochscheiben 6 und 7 wird dann durch die Seitenflächen 23 und 24 der Ausnehmungen begrenzt. Es kann der jeweilige Abstand 28 und 29 der Seitenflächen 23 und 24 zu den entsprechend aufgenommenen Lochscheiben 6 und 7 so bemessen und auf die Abmessungen und die Festigkeit der Lochscheiben 6 und 7, insbesondere deren elastisch verformbare Teile, abgestimmt sein, dass bei vorgegebener axialer Vorspannung durch die Schraubverbindung die verformten Lochscheiben 6 und 7 an den jeweiligen Seitenflächen 23 und 24 unter vorgegebener Spannung anliegen. Die auf die Schraubverbindung aufgebrachte Vorspannkraft ist entsprechend gewählt und so bestimmt, dass eine sichere Montage der Vorrichtung am Bauteil auch bei vorgegebenen Betriebsbedingungen über die Lebenszeit gewährleistet ist. Hier sind die Dimensionierung der Abstände der Seitenflächen 23 und 24 zu den entsprechenden Lochscheiben 6 und 7 sowie der Abstand 27 zwischen den Stirnseiten 25 und 26 der ersten und zweiten Lochscheibe 6 und 7 (Klemmspalt) in der vorgegebenen, bestimmungsgemäßen Montagelage und in einem entspannten Zustand der Lochscheiben 6 und 7 aufeinander und in weiterer Abhängigkeit von der Festigkeit, insbesondere der Shore-Härte, der Lochscheiben 6 und 7 so abgestimmt, dass bei vorgegebener axialer Vorspannung durch die Schraubverbindung der Klemmspalt geschlossen ist, also die Stirnseiten 25 und 26 aufeinander anliegen, ggf. unter vorgegebener Spannung aufeinander gepresst sind, und die verformten Lochscheiben 6 und 7 an den jeweiligen Seitenflächen 23 und 24 unter vorgegebener Spannung anliegen. Die Verformung der Beilagscheiben, Unterlegscheibe, der Schraube und der Hülsen in axialer Richtung kann hier aufgrund ihrer größeren Festigkeit vernachlässigt werden oder mit in die Kalkulation einfließen. Der in der vorgegebenen, bestimmungsgemäßen Montagelage und in einem entspannten Zustand der Lochscheiben 6 und 7 bestehende Klemmspalt zwischen den gegenüberliegenden, aufeinander gerichteten und einander zugewandten Hülsenenden der Lochscheiben 6 und 7 wird durch die axiale Vorspannung durch die Schraubverbindung mittels der Schraube 3 und dem Gewindeträger 5 und der elastischen Verformung zumindest der elastisch verformbaren Teile der Lochscheiben 6 und 7 geschlossen. Dabei wird auch eine vorgegebene elastische Deformation in axialer Richtung der Lochscheiben 6 und 7 nicht überschritten.

Die Vorrichtung ist in der Figur in der vorgegebenen Montagelage skizziert, jedoch noch ohne Vorspannung durch die Schraubverbindung. Die Lochscheiben 6, und 7 sind daher noch im entspannten Zustand dargestellt.

Die erste Ausnehmung ist hier so tief, dass die erste Lochscheibe 6 vollständig aufgenommen und in ihr versenkt ist. Nur der Schraubenkopf 4 ragt noch etwa aus der ersten Ausnehmung heraus. Die Tiefe der zweiten Ausnehmung ist hingegen zur zweiten Lochscheibe 7 so bemessen, dass die zweite Lochscheibe 7 über sie übersteht. Die Dicke der zweiten Lochscheibe 7 zwischen ihrer zweiten Auflagefläche 9 und der am Bauteil 2 anliegenden Oberfläche der zweiten Beilagscheibe 19 ist größer als die Tiefe der zweiten Ausnehmung und damit größer als die Höhe der zweiten Seitenflächen 24 der zweiten Ausnehmung. Ein direkter Kontakt von Bauteil 2 und Werkstück 1 wird so vermieden. Dies gilt sowohl im entspannten Zustand der zweiten Lochscheibe 7 als auch im vorgespannten, montierten Zustand der zweiten Lochscheibe 7.

Das Werkstück 1 weist im Bereich der zweiten Ausnehmung darüber hinaus einen umlaufenden Vorsprung 32 in den zweiten Seitenflächen 24 zur Fassung der zweiten Lochscheibe 7 auf. Zweite Lochscheibe 7 und Vorsprung 32 gehen eine Presspassung ein. Die zweite Lochscheibe 7 wird hierdurch in der zweiten Ausnehmung geklemmt und somit gegen Verdrehung gesichert. Eine radiale Ausdehnung der zweiten Lochscheibe 7 ist dadurch nur im Bereich des Vorsprungs verhindert. Dieser Bereich ist jedoch klein im Vergleich zur Tiefe der zweiten Ausnehmung bzw. zur Höhe der Seitenflächen 24 der zweiten Ausnehmung. Neben einem ringförmigen Vorsprung könnte auch eine punktuelle Klemmung über nasenförmige Vorsprünge erfolgen. Durch die Klemmung wird ein Verdrehen der zweiten Lochscheibe 7 relativ zum Werkstück 1 verhindert.

## Patentansprüche

1. Vorrichtung zur lösbaren Befestigung eines Werkstücks (1) umfassend eine Schraube (3) oder eine Gewindestange und das Werkstück (1) mit einer Durchgangsbohrung (31) zur Durchführung der Schraube (3) oder der Gewindestange, wobei die Vorrichtung wenigstens zwei elastisch verformbare Lochscheiben (6, 7) umfasst, die jeweils eine Durchgangsbohrung (32 ,33) zur Durchführung der Schraube (3) oder der Gewindestange aufweisen, wobei das Werkstück (1) eine erste Anlagefläche (10) zur Anlage einer ersten Lochscheibe (6) und eine zweite Anlagefläche (11) zur Anlage einer zweiten Lochscheibe (7) beidseitig der Durchgangsbohrung (31) aufweist, wobei das Werkstück (1) ausgebildet ist, die erste Lochscheibe (6) an der ersten Anlagefläche (10) anliegend und die zweite Lochscheibe (7) an der zweiten Anlagefläche (11) anliegend im Bereich ihrer Durchgangsbohrung (31) derart in jeweils vorgegebenen, bestimmungsgemäßen Montagelagen aufzunehmen, dass die Durchgangsbohrungen (31, 32, 33) des Werkstücks (1) und der ersten Lochscheibe (6) und der zweiten Lochscheibe (7) zumindest teilweise überdeckend angeordnet sind, so dass die Schraube (3) oder die Gewindestange durch die Durchgangsbohrung (31) des Werkstücks und durch die Durchgangsbohrung (32) der ersten Lochscheibe (6) und durch die Durchgangsbohrung (33) der zweiten Lochscheibe (7) durchführbar ist, wobei die erste Lochscheibe (6) eine rohrförmige erste Hülse (13) zur Durchführung der Schraube (3) oder der Gewindestange durch die rohrförmige erste Hülse (13) umfasst, welche eine Verformung der ersten Lochscheibe (6) in radialer Richtung zur Achse der Durchgangsbohrung (32) der ersten Lochscheibe (6) hin begrenzt und wobei die zweite Lochscheibe (7) eine rohrförmige zweite Hülse (18) zur Durchführung der Schraube (3) oder der Gewindestange durch die rohrförmige zweite Hülse umfasst, welche eine Verformung der zweiten Lochscheibe (7) in radialer Richtung zur Achse der Durchgangsbohrung (33) der zweiten Lochscheibe (7) hin begrenzt, wobei die erste Hülse (13) derart über eine erste Auflagefläche (8) der ersten Lochscheibe (6) zur Anlage an der ersten Anlagefläche (10) des Werkstücks übersteht, so dass die erste Hülse (13) in vorgegebener, bestimmungsgemäßer Montagelage der ersten Lochscheibe (6) in die Durchgangsbohrung (31) im Werkstück (1) hineinragt und wobei die zweite Hülse (18) derart über eine zweite Auflagefläche (9) der zweiten Lochscheibe (7) zur Anlage an der zweiten Anlagefläche (11) des Werkstücks (1) übersteht, so dass die zweite Hülse (18) in vorgegebener, bestimmungsgemäßer Montagelage der zweiten Lochscheibe (7) in die Durchgangsbohrung (31) im Werkstück (1) hineinragt, wobei das Werkstück (1) einen vorgegebenen freien Raum in radialer Richtung zur Achse der Durchgangsbohrung (32) durch die erste Lochscheibe (6) in der vorgegebenen, bestimmungsgemäßen Montagelage und in einem entspannten Zustand der ersten Lochscheibe (6) um die erste Lochscheibe (6) aufweist, so dass sich die erste Lochscheibe (6) in zumindest vorgegebenem Maße elastisch in radialer Richtung verformen kann, und wobei das Werkstück (1) einen vorgegebenen freien Raum in radialer Richtung zur Achse der Durchgangsbohrung (33) durch die zweite Lochscheibe (7) in der vorgegebenen, bestimmungsgemäßen Montagelage und in einem entspannten Zustand der zweiten Lochscheibe (7) um die zweite Lochscheibe (7) aufweist, so dass sich die zweite Lochscheibe (7) in zumindest vorgegebenem Maße elastisch in radialer Richtung verformen kann, **dadurch gekennzeichnet, dass** eine Wandstärke des Werkstücks (1) zwischen der ersten Anlagefläche (10) und der zweiten Anlagefläche (11) derart auf die erste und die zweite in die Durchgangsbohrung des Werkstücks hineinragenden Hülsen (13, 18) abgestimmt ist, dass in vorgegebener, bestimmungsgemäßer Montagelage der ersten und der zweiten Lochscheibe (6, 7) und im entspannten Zustand der ersten und der zweiten Lochscheibe (6, 7) zwischen den beiden sich gegenüberliegenden, in der Durchgangsbohrung (31) des Werkstücks (1) angeordneten Stirnseiten (25, 26) der ersten und zweiten Hülse (13, 18) ein vorgegebener Abstand (27) größer Null ausgebildet ist.

2. Vorrichtung nach Anspruch 1,
**dadurch gekennzeichnet, dass**
das Werkstück (1) eine erste Ausnehmung zur Aufnahme der ersten Lochscheibe (6) aufweist, wobei eine erste Grundfläche der ersten Ausnehmung die erste Anlagefläche (10) zur Anlage der ersten Lochscheibe (6) bildet und wobei die erste Ausnehmung derart ausgebildet ist, dass Seitenflächen (23) der ersten Ausnehmung einen vorgegebenen Abstand (28) größer Null zur ersten Lochscheibe (6) in der vorgegebenen, bestimmungsgemäßen Montagelage und im entspannten Zustand der ersten Lochscheibe (6) aufweisen und/oder, dass das Werkstück eine zweite Ausnehmung zur Aufnahme der zweiten Lochscheibe (7) aufweist, wobei eine zweite Grundfläche der zweiten Ausnehmung die zweite Anlagefläche (11) zur Anlage der zweiten Lochscheibe (7) bildet und wobei die zweite Ausnehmung derart ausgebildet ist, dass Seitenflächen (24) der zweiten Ausnehmung einen vorgegebenen Abstand (29) größer Null zur zweiten Lochscheibe (7) in der vorgegebenen, bestimmungsgemäßen Montagelage und im entspannten Zustand der zweiten Lochscheibe (7) aufweisen.

3. Vorrichtung nach einem der Ansprüche 1 oder 2,
**dadurch gekennzeichnet, dass**
der Abstand (27) der sich gegenüberliegenden, in der Durchgangsbohrung (31) des Werkstücks (1) angeordneten Stirnseiten (25, 26) der ersten und zweiten Hülse (13, 18) und die freien Räume in radialer Richtung zu den Achsen der Durchgangsbohrungen (32, 33) durch die erste und die zweite Lochscheibe (6, 7) in gegenseitiger Abhängigkeit und in weiterer Abhängigkeit von den Festigkeiten der ersten und zweiten Lochscheibe (6, 7) und von einer mittels der Schraube (3) oder der Gewindestange aufgebrachten, vorgegebenen Vorspannkraft vorgegeben sind.

4. Vorrichtung nach einem der Ansprüche 1 bis 3,
**dadurch gekennzeichnet, dass**
die erste Lochscheibe (6) eine Ausstülpung (15) aufweist, die in vorgegebener, bestimmungsgemäßer Montagelage der ersten Lochscheibe (6) in die Durchgangsbohrung (31) des Werkstücks (1) hineinragt und/oder dass die zweite Lochscheibe (7) eine Ausstülpung (20) aufweist, die in vorgegebener, bestimmungsgemäßer Montagelage der zweiten Lochscheibe (7) in die Durchgangsbohrung (31) des Werkstücks (1) hineinragt.

5. Vorrichtung nach einem der Ansprüche 1 bis 4,
**dadurch gekennzeichnet, dass**
die erste Lochscheibe (6) eine erste Beilagscheibe (14) zur Anlage eines Schraubenkopfs (4) der Schraube (3) oder eines Gewindeträgers zur Verschraubung mit der Gewindestange umfasst, welche in vorgegebener, bestimmungsgemäßer Montagelage der ersten Lochscheibe (6) auf einer, der ersten Auflagefläche (8) entgegengesetzten Seite der ersten Lochscheibe (6) angeordnet ist und welche fest ausgebildet ist und eine gleichmäßige Krafteinleitung einer durch den Schraubenkopf (4) oder den Gewindeträger aufgebrachten Vorspannkraft in die erste Lochscheibe (6) bewirkt und/oder, dass die zweite Lochscheibe (7) eine zweite Beilagscheibe (19) zur Anlage eines Schraubenkopfs der Schraube oder eines Gewindeträgers (5) zur Verschraubung mit der Schraube oder Gewindestange umfasst, welche in vorgegebener, bestimmungsgemäßer Montagelage der zweiten Lochscheibe (7) auf einer, der zweiten Auflagefläche (9) entgegengesetzten Seite der zweiten Lochscheibe (7) angeordnet ist und welche fest ausgebildet ist und eine gleichmäßige Krafteinleitung einer durch den Schraubenkopf oder den Gewindeträger (5) aufgebrachten Vorspannkraft in die zweite Lochscheibe (7) bewirkt.

6. Vorrichtung nach Anspruch 5,
**dadurch gekennzeichnet, dass**
die erste Beilagscheibe (14) und die erste Hülse (13) fest miteinander verbunden sind und/oder, dass die zweite Beilagscheibe (19) und die zweite Hülse (18) fest miteinander verbunden sind.

7. Vorrichtung nach Anspruch 2,
**dadurch gekennzeichnet, dass**
der Abstand (28) von den Seitenflächen (23) der ersten Ausnehmung zur ersten Lochscheibe (6) in der vorgegebenen, bestimmungsgemäßen Montagelage und im entspannten Zustand der ersten Lochscheibe (6) in Abhängigkeit der Festigkeit der ersten Lochscheibe (6) derart vorgegeben ist, dass bei einer mittels der Schraube (3) oder der Gewindestange aufgebrachten, vorgegebenen Vorspannkraft die dadurch elastisch verformte erste Lochscheibe (6) an den Seitenflächen (23) der ersten Ausnehmung anliegt und/oder, dass der Abstand (29) von den Seitenflächen (24) der zweiten Ausnehmung zur zweiten Lochscheibe (7) in der vorgegebenen, bestimmungsgemäßen Montagelage und im entspannten Zustand der zweiten Lochscheibe (7) in Abhängigkeit der Festigkeit der zweiten Lochscheibe (7) derart vorgegeben ist, dass bei einer mittels der Schraube (3) oder der Gewindestange aufgebrachten, vorgegebenen Vorspannkraft die dadurch elastisch verformte zweite Lochscheibe (7) an den Seitenflächen (24) der zweiten Ausnehmung anliegt.

8. Vorrichtung nach einem der Ansprüche 1 bis 7,
**dadurch gekennzeichnet, dass**
das Werkstück (1) mit einem generativen Fertigungsverfahren aus einem Kunststoff hergestellt ist.

9. Vorrichtung nach Anspruch 8,
**dadurch gekennzeichnet, dass**
das Werkstück (1) zumindest teilweise schichtweise hergestellt ist, wobei die Schichten im Bereich der ersten und zweiten Anlagefläche (10, 11) eine Richtungskomponente in axialer Richtung zur Durchgangsbohrung (31) aufweisen, so dass eine Krafteinleitung durch die gegenseitig gegen das Werkstück vorgespannten Lochscheiben (6, 7) auf verschiedene Schichten verteilt ist.

10. Vorrichtung nach einem der Ansprüche 1 bis 9,
**dadurch gekennzeichnet, dass**
das Werkstück (1) ein Verkleidungsteil für ein Fahrzeug ist.

11. Fahrzeug mit wenigstens einer Vorrichtung nach einem der Ansprüche 1 bis 10.

12. Fahrzeug nach Anspruch 11,
**dadurch gekennzeichnet, dass**
die wenigstens eine Vorrichtung an einer Stelle mit hohen, zyklischen Betriebslasten montiert ist.

## Claims

1. Device for detachable fastening of a workpiece (1) comprising a screw (3) or a threaded bar and the workpiece (1) with a through hole (31) for feeding through the screw (3) or the threaded bar, wherein the device comprises at least two elastically deformable punched discs (6, 7), each of which has a through hole (32, 33) for feeding through the screw (3) or the threaded bar, wherein the workpiece (1) has a first contact surface (10) for contacting a first punched disc (6) and a second contact surface (11) for contacting a second punched disc (7) on both sides of the through hole (31), wherein the workpiece (1) is embodied to receive the first punched disc (6) resting on the first contact surface (10) and the second punched disc (7) resting on the second contact surface (11) in the region of its through hole (31) in conventional assembly positions predetermined in each case such that the through holes (31, 32, 33) of the workpiece (1) and the first punched disc (6) and the second punched disc (7) are arranged so as to overlap at least partially so that the screw (3) or the threaded bar can be passed through the through hole (31) of the workpiece and through the through hole (32) of the first punched disc (6) and through the through hole (33) of the second punched disc (7), wherein the first punched disc (6) comprises a tube-shaped first sleeve (13) for feeding the screw (3) or the threaded bar through the tube-shaped first sleeve (13), which delimits a deformation of the first punched disc (6) in the radial direction with respect to the axis of the through hole (32) of the first punched disc (6) and wherein the second punched disc (7) comprises a tube-shaped second sleeve (18) for feeding the screw (3) or the threaded bar through the tube-shaped second sleeve, which delimits a deformation of the second punched disc (7) in the radial direction with respect to the axis of the through hole (33) of the second punched disc (7), wherein the first sleeve (13) projects beyond a first contact surface (8) of the first punched disc (6) for contacting the first contact surface (10) of the workpiece so that the first sleeve (13) projects into the through hole (31) in the workpiece (1) in the predetermined, conventional assembly position of the first punched disc (6) and wherein the second sleeve (18) projects beyond a second contact surface (9) of the second punched disc (7) for contacting the second contact surface (11) of the workpiece (1) so that the second sleeve (18) projects into the through hole (31) in the workpiece (1) in a predetermined, conventional assembly position of the second punched disc (7), wherein the workpiece (1) has a predetermined free clearance in the radial direction with respect to the axis of the through hole (32) through the first punched disc (6) in the predetermined, conventional assembly position and in a relaxed state of the first punched disc (6) around the first punched disc (6) so that the first punched disc (6) can deform elastically in a radial direction to at least a predetermined degree, and wherein the workpiece (1) has a predetermined free clearance in the radial direction with respect to the axis of the through hole (33) through the second punched disc (7) in the predetermined, conventional assembly position and in a relaxed state of the second punched disc (7) around the second punched disc (7) so that the second punched disc (7) can deform elastically in the radial direction to at least a predetermined degree, **characterised in that** a wall thickness of the workpiece (1) between the first contact surface (10) and the second contact surface (11) is matched to the first and the second sleeves (13, 18) projecting into the through hole of the workpiece so that a predetermined distance (27) of greater than zero is embodied in a predetermined, conventional assembly position of the first and the second punched disc (6, 7) and in the relaxed state of the first and the second punched disc (6, 7) between the two end faces (25, 26) of the first and second sleeve (13, 18) arranged opposite to one another in the through hole (31) of the workpiece (1).

2. Device according to claim 1,
**characterised in that**
the workpiece (1) has a first recess for receiving the first punched disc (6), wherein a first base area of the first recess forms the first contact surface (10) for contacting the first punched disc (6) and wherein the first recess is embodied such that side surfaces (23) of the first recess have a predetermined distance (28) of greater than zero with respect to the first punched disc (6) in the predetermined, conventional assembly position and in the relaxed state of the first punched disc (6) and/or that the workpiece has a second recess for receiving the second punched disc (7), wherein a second base area of the second recess forms the second contact surface (11) for contacting the second punched disc (7) and wherein the second recess is embodied such that side surfaces (24) of the second recess have a predetermined distance (29) of greater than zero with respect to the second punched disc (7) in the predetermined, conventional assembly position and in the relaxed state of the second punched disc (7).

3. Device according to one of claims 1 or 2,
**characterised in that**
the distance (27) of the front faces (25, 26), arranged opposite to one another in the through hole (31) of the workpiece (1), of the first and second sleeve (13, 18) and the free clearances in the radial direction with respect to the axes of the through holes (32, 33) through the first and second punched discs (6, 7) are predetermined as a mutual function of and as a further function of the stabilities of the first and second punched disc (6, 7) and of a predetermined pretensioning force applied by means of the screw (3) or the threaded bar.

4. Device according to one of claims 1 to 3,
**characterised in that**
the first punched disc (6) has a protuberance (15), which projects into the through hole (31) of the workpiece (1) in a predetermined, conventional assembly position of the first punched disc (6) and/or that the second punched disc (7) has a protuberance (20) which projects into the through hole (31) of the workpiece (1) in a predetermined, conventional assembly position of the second punched disc (7).

5. Device according to one of claims 1 to 4,
**characterised in that**
the first punched disc (6) comprises a first lining disc (14) for contacting a screw head (4) of the screw (3) or a threaded carrier for screwing to the threaded bar, which is arranged in a predetermined, conventional assembly position of the first punched disc (6) on a side of the first punched disc (6) opposite the first contact surface (8) and which is fixedly embodied and effects a uniform force transmission of a pretensioning force applied by the screw head (4) or the threaded carrier into the first punched disc (6) and/or that the second punched disc (7) comprises a second lining disc (19) for contacting a screw head of the screw or a threaded carrier (5) for screwing to the screw or threaded bar, which, in a predetermined, conventional assembly position of the second punched disc (7), is arranged on a side of the second punched disc (7) opposite to the second contact surface (9) and which is fixedly embodied and effects a uniform force transmission of a pretensioning force applied by the screw head or the threaded carrier (5) into the second punched disc (7).

6. Device according to claim 5,
**characterised in that**
the first lining disc (14) and the first sleeve (13) are fixedly connected to one another and/or the second lining disc (19) and the second sleeve (18) are fixedly connected to one another.

7. Device according to claim 2,
**characterised in that**
the distance (28) from the side surfaces (23) of the first recess in respect of the first punched disc (6) is predetermined in the predetermined, conventional assembly position and in the relaxed state of the first punched disc (6) as a function of the stability of the first punched disc (6) such that with a predetermined pretensioning force applied by means of the screw (3) or the threaded bar, the first punched disc (6) deformed elastically as a result rests against the side surface (23) of the first recess and/or the distance (29) from the side surfaces (24) of the second recess in respect of the second punched disc (7) is predetermined in the predetermined, conventional assembly position and in the relaxed state of the second punched disc (7) as a function of the stability of the second punched disc (7) such that with a predetermined pretensioning force applied by means of the screw (3) or the threaded bar, the second punched disc (7) which is elastically deformed as a result rests against the side surfaces (24) of the second recess.

8. Device according to one of claims 1 to 7,
**characterised in that**
the workpiece (1) is produced from plastic using a generative production method.

9. Device according to claim 8,
**characterised in that**
the workpiece (1) is produced at least partially in layers, wherein the layers in the region of the first and second contact surface (10, 11) have a directional component in the axial direction with respect to the through hole (31) so that a force transmission is distributed onto different layers by the punched discs (6, 7) which are pretensioned mutually against the workpiece.

10. Device according to one of claims 1 to 9, **characterised in that** the workpiece (1) is a cover part for a vehicle.

11. Vehicle with at least one device according to one of claims 1 to 10.

12. Vehicle according to claim 11,
**characterised in that**
the at least one device is assembled on a point with high cyclical operating loads.

## Revendications

1. Dispositif de fixation amovible d'une pièce (1) comprenant une vis (3) ou une tige filetée et la pièce (1) ayant un alésage (31) traversant pour le passage de la vis (3) ou de la tige filetée, dans lequel le dispositif comprend au moins deux disques (6, 7) à trou déformables élastiquement, qui ont chacun un alésage (32, 33) pour le passage de la vis (3) ou de la tige filetée, dans lequel la pièce (1) a une première surface (10) d'application pour l'application d'un premier disque (6) à trou et une deuxième surface (11) d'application pour l'application d'un deuxième disque (7) à trou de part et d'autre de l'alésage (31) traversant, dans lequel la pièce (1) est constituée pour recevoir le premier disque (6) à trou s'appliquant à la première surface (10) d'application et le deuxième disque (7) à trou s'appliquant à une deuxième surface (11) d'application dans la partie de leur alésage (31) traversant, de manière à ce que, dans respectivement des positions de montage données à l'avance conformes aux prescriptions, les alésages (31, 32, 33) traversants de la pièce (1) et du premier disque (6) à trou et du deuxième disque (7) à trou soient disposés à recouvrement au moins en partie, de sorte que la vis (3) ou la tige filetée puisse passer par l'alésage (31) traversant de la pièce et par l'alésage (32) traversant du premier disque (6) à trou par l'alésage (33) traversant du deuxième disque (7) à trou, dans lequel le premier disque (6) à trou comprend un premier manchon (13) tubulaire pour le passage de la vis (3) ou de la tige filetée dans le premier manchon (13) tubulaire, qui limite une déformation du premier disque (6) à trou dans la direction radiale, par rapport à l'axe du trou (32) traversant du premier disque (6) à trou et dans lequel le deuxième disque (7) à trou comprend un deuxième manchon (18) tubulaire pour le passage de la vis (3) ou de la tige filetée par le deuxième manchon tubulaire, qui limite une déformation du deuxième disque (7) à trou dans la direction radiale par rapport à l'axe du trou (33) traversant du deuxième disque (7) à trou, dans lequel le premier manchon (13) dépasse de la première surface (8) d'application du premier disque (6) à trou pour l'application sur la première surface (10) d'application de la pièce, de manière à ce que le premier manchon (13) pénètre, dans la position de montage donnée à l'avance conforme aux prescriptions du premier disque (6) à trou, dans l'alésage (31) traversant de la pièce (1) et dans lequel le deuxième manchon (18) dépasse d'une deuxième surface (9) d'application du deuxième disque (7) à trou pour l'application sur la deuxième surface (11) d'application de la pièce (1), de manière à ce que le deuxième manchon (18) pénètre, dans la position de montage donnée à l'avance conforme aux prescriptions du deuxième disque (7) à trou, dans l'alésage (31) traversant de la pièce (1), dans lequel la pièce (1) a, autour du premier disque (6) à trou, un espace libre dans la direction radiale par rapport à l'axe du trou (32) traversant dans la position de montage donnée à l'avance conforme aux prescriptions et dans un état détendu du premier disque (6) à trou, de manière à ce que le premier disque (6) à trou puisse, au moins dans une mesure donnée à l'avance, se déformer élastiquement dans la direction radiale, et dans lequel la pièce (1) a, autour du deuxième disque (7) à trou, un espace libre donné à l'avance dans la direction radiale par rapport à l'axe de l'alésage (33) traversant dans le deuxième disque (7) à trou dans la position de montage donnée à l'avance conforme à la prescription et dans un état détendu du deuxième disque (7) à trou, de manière à ce que le deuxième disque (7) à trou puisse, dans une mesure au moins donnée l'avance, se déformer élastiquement dans la direction radiale, **caractérisé en ce qu'**une épaisseur de paroi de la pièce (1), entre la première surface (10) d'application et la deuxième surface (11) d'application, est adaptée aux premier et au deuxième manchons (13, 18) pénétrant dans l'alésage traversant de la pièce, de manière à, dans la position de montage donnée à l'avance conforme aux prescriptions du premier et du deuxième disque (6, 7) à trou et dans l'état détendu du premier et du deuxième disque (6, 7) à trou, constituer, entre les deux côtés (25, 26) frontaux opposés, disposés dans le trou (31) traversant de la pièce (1), du premier et du deuxième manchon (13, 18), une distance (27) donnée à l'avance plus grande que zéro.

2. Dispositif suivant la revendication 1,
**caractérisé en ce que**
la pièce (1) a un premier évidement de réception du premier disque (6) à trou, dans lequel une première surface de base du premier évidement forme la première surface (10) d'application pour l'application du premier disque (6) à trou et dans lequel le premier évidement est constitué de manière à ce que des surfaces (23) latérales du premier évidement aient une distance (28) donnée à l'avance plus grande que zéro par rapport au premier disque (6) à trou dans la position de montage donnée à l'avance conforme aux prescriptions et dans l'état détendu du premier disque (6) à trou et/ou **en ce que** la pièce a un deuxième évidement pour la réception du deuxième disque (7) à trou, dans lequel une deuxième surface de base du deuxième évidement forme la deuxième surface (11) d'application pour l'application du deuxième disque (7) à trou et dans lequel le deuxième évidement est constitué de manière à ce que des surfaces (24) latérales du deuxième évidement aient une distance (29) donnée à l'avance plus grande que zéro par rapport au deuxième disque (7) à trou dans la position de montage donnée à l'avance conforme aux prescriptions et dans l'état détendu, du deuxième disque (7) à trou.

3. Dispositif suivant l'une des revendications 1 ou 2,
**caractérisé en ce que**
la distance (27) des côtés (25, 26) frontaux opposés, disposés dans l'alésage (31) traversant de la pièce (1), du premier et du deuxième manchon (13, 18) et les espaces libres, dans la direction radiale par rapport aux axes des alésages (32, 33) traversants les premier et deuxième disques (6, 7) à trou, sont donnés à l'avance en fonction réciproque et en fonction supplémentaire des résistances du premier et du deuxième disque (6, 7) à trou et d'une force de précontrainte donnée à l'avance appliquée au moyen de la vis (3) ou de la tige filetée.

4. Dispositif suivant l'une des revendications 1 à 3,
**caractérisé en ce que**
le premier disque (6) à trou a un retour (15) qui, dans la position de montage donnée à l'avance conforme aux prescriptions du premier disque (6) à trou, pénètre dans l'alésage (31) traversant de la pièce (1) et/ou **en ce que** le deuxième disque (7) à trou a un retour (20) qui, dans le position de montage donnée à l'avance conforme aux prescriptions du deuxième disque (7) à trou pénètre dans l'alésage (31) traversant de la pièce (1).

5. Dispositif suivant l'une des revendications 1 à 4,
**caractérisé en ce que**
le premier disque (6) à trou comprend un premier disque (14) supplémentaire d'application d'une tête (4) de la vis (3) ou d'un support fileté pour le vissage avec la tige filetée qui, dans la position de montage donnée à l'avance conforme aux prescriptions du premier disque (6) à trou, est disposé d'un côté, opposé à la première surface (8) d'application, du premier disque (6) à trou et qui est constitué d'une manière fixe et provoque, dans le premier disque (6) à trou, une application uniforme d'une force de précontrainte appliquée par la tête (4) de la vis ou par le support fileté, et/ou **en ce que** le deuxième disque (7) à trou comprend un deuxième disque (19) supplémentaire pour l'application d'une tête de la vis ou d'un support (5) fileté pour le vissage avec la vis ou la tige filetée qui, dans la position de montage donnée conforme aux prescriptions du deuxième disque (7) à trou, est disposé d'un côté, opposé à la deuxième surface (9) d'application, du deuxième disque (7) à trou et qui est constitué d'une manière fixe et provoque, dans le deuxième disque (7) à trou, une force de précontrainte appliquée par la tête de la vis ou par le support (5) de filetage.

6. Dispositif suivant la revendication 5,
**caractérisé en ce que**
le premier disque (14) supplémentaire et le premier manchon (13) sont assemblés fixement l'un à l'autre et/ou **en ce que** le deuxième disque (18) supplémentaire et le deuxième manchon (19) sont assemblés de manière fixe l'un à l'autre.

7. Dispositif suivant la revendication 2,
**caractérisé en ce que**
la distance (28) des surfaces (23) latérales du premier évidement au premier disque (6) à trou est, dans la position de montage donnée à l'avance conforme aux prescriptions et à l'état détendu du premier disque (6) à trou, donnée à l'avance en fonction de la solidité du premier disque (6) à trou, de manière à ce que, pour une force de précontrainte donnée à l'avance appliquée au moyen de la vis (3) ou de la tige filetée, le premier disque (6) à trou déformé ainsi élastiquement s'applique aux surfaces (23) latérales du premier évidement et/ou **en ce que** la distance (29) des surfaces (24) latérales du deuxième évidement au deuxième disque (7) à trou est, dans l'état de montage donné à l'avance conforme aux prescriptions et dans l'état détendu du deuxième disque (7) à trou, donnée à l'avance en fonction de la solidité du deuxième disque (7) à trou, de manière à ce que, lorsqu'une force de précontrainte donnée à l'avance appliquée au moyen de la vis (3) ou de la tige filetée, le deuxième disque (7) à trou déformé ainsi élastiquement s'applique aux surfaces (24) latérales du deuxième évidement.

8. Dispositif suivant l'une des revendications 1 à 7,
**caractérisé en ce que**
la pièce (1) est fabriquée en une matière plastique à partir d'un procédé de fabrication génératif.

9. Dispositif suivant la revendication 8,
**caractérisé en ce que**
la pièce (1) est fabriquée au moins en partie couche par couche, dans lequel les couches, dans la partie de la première et de la deuxième surface (10, 11) d'application ont une composante directionnelle dans une direction axiale par rapport au trou (31) traversant, de manière à répartir sur diverses couches une application de force par les disques (6, 7) à trou précontraints d'une manière réciproque sur la pièce.

10. Dispositif suivant l'une des revendications 1 à 9,
**caractérisé en ce que**
la pièce (1) est une partie d'habillage pour un véhicule.

11. Véhicule comprenant au moins un dispositif suivant l'une des revendications 1 à 10.

12. Véhicule suivant la revendication 11,
**caractérisé en ce que**
le au moins un dispositif est monté en un point ayant une grande charge de fonctionnement cyclique.
